# EUROPEAN PATENT APPLICATION

(11) **EP 4 191 782 A1**
(43) Date of publication of application: **07.06.2023**
(21) Application number: 22207614.3
(22) Date of filing: 15.11.2022
(51) Int. Cl.: H01M 50/545, H01M 50/107, H01M 50/152, H01M 50/167, H01M 50/171, H01M 50/179, H01M 50/188, H01M 50/547, H01M 50/559

(54) **CYLINDRICAL SECONDARY BATTERY**

(30) Priority: 02.12.2021 KR 20210170923
(71) Applicant: Samsung SDI Co., Ltd., Yongin-si, Gyeonggi-do 17084 (KR)
(72) Inventor: MOON, Jin Young, 17084 Yongin-si (KR); PARK, Gun Gue, 17084 Yongin-si (KR); YU, Gwan Hyeon, 17084 Yongin-si (KR); JUNG, Hyun Ki, 17084 Yongin-si (KR); KIM, Myung Seob, 17084 Yongin-si (KR); KO, Sung Gwi, 17084 Yongin-si (KR); CHO, Woo Hyuk, 17084 Yongin-si (KR)
(74) Representative: Marks & Clerk LLP

(57) **Abstract**

A cylindrical secondary battery includes: an electrode assembly including a positive electrode plate, a separator, and a negative electrode plate; a cylindrical can accommodating the electrode assembly and being electrically connected to the negative electrode plate, a lower end of the cylindrical can being open; a rivet terminal passing through an upper surface of the cylindrical can and electrically connected to the positive electrode plate; and a cap plate sealing the lower end of the cylindrical can, the cap plate having no electrical polarity.

## Description

### BACKGROUND

### 1. Field

Aspects of embodiments of the present disclosure relate to a cylindrical secondary battery.

### 2. Description of the Related Art

Generally, a cylindrical secondary battery includes a cylindrical electrode assembly, a cylindrical can accommodating the electrode assembly and an electrolyte, and a cap assembly coupled at a top opening in the can to seal the can and electrically connected to the electrode assembly to provide electrical connection between the electrode assembly and an external component.

A cylindrical secondary battery generally has a structure in which a can having a negative electrode and a cap assembly having a positive electrode are insulated from each other by a gasket. In a battery module including a plurality of cylindrical secondary batteries connected to each other, bus bars are often connected to the upper and lower portions of the secondary batteries, thereby complicating the structure of the battery module and increasing the process time (e.g., the manufacturing time) thereof.

The above information disclosed in this Background section is for enhancement of understanding of the background of the present disclosure, and therefore, it may contain information that does not constitute prior art.

### SUMMARY

Embodiments of the present disclosure provide a cylindrical secondary battery which has irregularities on a cap plate to better support the internal pressure of a cylindrical can.

In addition, embodiments of the present disclosure provide a cylindrical secondary battery which maintains its overall height even when a cap plate expands due to an increase in internal pressure of a cylindrical can because a crimping part of the cylindrical can protrudes further downwardly than a protrusion of the cap plate.

In addition, embodiments of the present disclosure provide a cylindrical secondary battery having both a negative electrode and a positive electrode such that, when a plurality of cylindrical secondary batteries are electrically connected to one another through a bus bar, a bus bar connection structure can be simplified.

A cylindrical secondary battery, according to an embodiment of the present disclosure, includes: an electrode assembly including a positive electrode plate, a separator, and a negative electrode plate; a cylindrical can accommodating the electrode assembly and being electrically connected to the negative electrode plate, a lower end of the cylindrical can being open; a rivet terminal passing through an upper surface of the cylindrical can and electrically connected to the positive electrode plate; and a cap plate sealing the lower end of the cylindrical can, the cap plate having no electrical polarity.

The cylindrical can may have: an upper surface portion having a flat plate shape and a terminal hole extending through a center portion; and a side portion extending downwardly from an edge of the upper surface portion.

The rivet terminal may be coupled to the upper surface portion at the terminal hole with a first gasket interposed therebetween, and an upper end of the rivet terminal may be exposed to outside.

The cylindrical secondary battery may further include a plate-shaped positive electrode current collector plate accommodated in the cylindrical can. A lower surface of the positive electrode current collector plate may be fixed by welding and electrically connected to the positive electrode plate exposed at an upper end of the electrode assembly, and an upper surface of the positive electrode current collector plate may be welded to a lower surface of the rivet terminal.

The cylindrical can may have: a beading part recessed inwardly at (e.g. on) an upper portion of the cap plate; and a crimping part bent at the lower end of the cylindrical can to fix the cap plate and being at a lower portion of the cap plate.

The beading part may have: an upper flat portion and a lower flat portion having outer surfaces facing each other; and a connection part extending between the upper flat portion and the lower flat portion.

The cylindrical secondary battery may further include a negative electrode current collector plate accommodated in the cylindrical can and having a flat portion being in a plate shape. The negative electrode current collector plate may be welded to a lower surface of the electrode assembly and has an extension portion extending downwardly from an edge of the flat portion that is welded to the beading part of the cylindrical can.

The extension portion of the negative electrode current collector plate may have an end portion below the lower flat portion of the beading part and welded to an inner surface of the lower flat portion.

The cap plate may have: a protrusion that protrudes in a downwardly direction; and a concave portion that is concavely formed inwardly toward the cylindrical can with respect to the protrusion. A notch may be formed in the concave portion.

A lower surface of the beading part may protrude farther downwardly than the protrusion of the cap plate.

The cylindrical secondary battery may further include a second gasket between the cylindrical can and the cap plate.

At least some of the above and other features of the invention are set out in the claims.

### BRIEF DESCRIPTION OF DRAWINGS

FIG. 1 is a perspective view of a cylindrical secondary battery according to an embodiment of the present disclosure.
FIG. 2 is a cross-sectional view of the cylindrical secondary battery shown in FIG. 1.
FIG. 3 is an enlarged cross-sectional view of a part of the cylindrical secondary battery shown in FIG. 2.
FIG. 4 is a bottom perspective view of a configuration in which a negative electrode current collector is coupled to a lower portion of a cylindrical can.

### DETAILED DESCRIPTION

Hereinafter, embodiments of the present disclosure will be described, in detail, with reference to the accompanying drawings.

Examples of the present disclosure are provided to more fully explain the present disclosure to those skilled in the art, and the following examples may be modified in various other forms. In other words, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

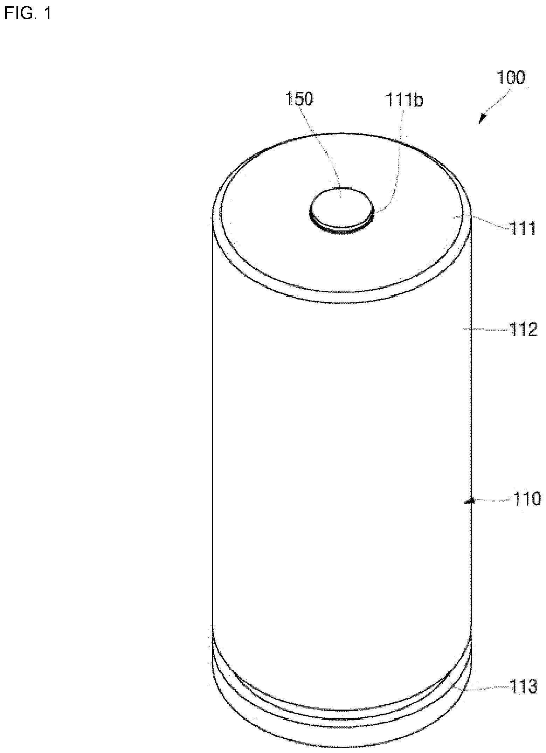

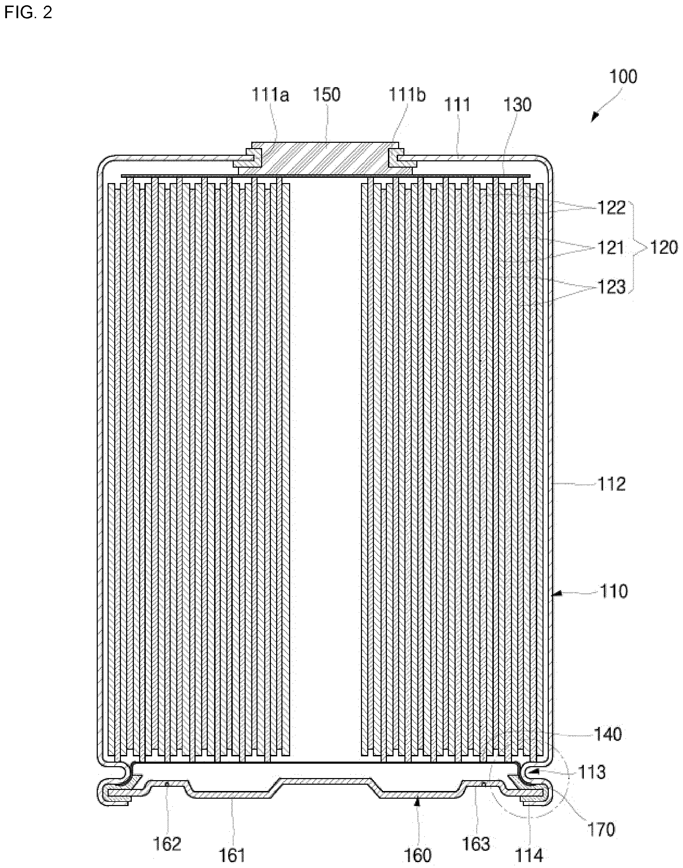

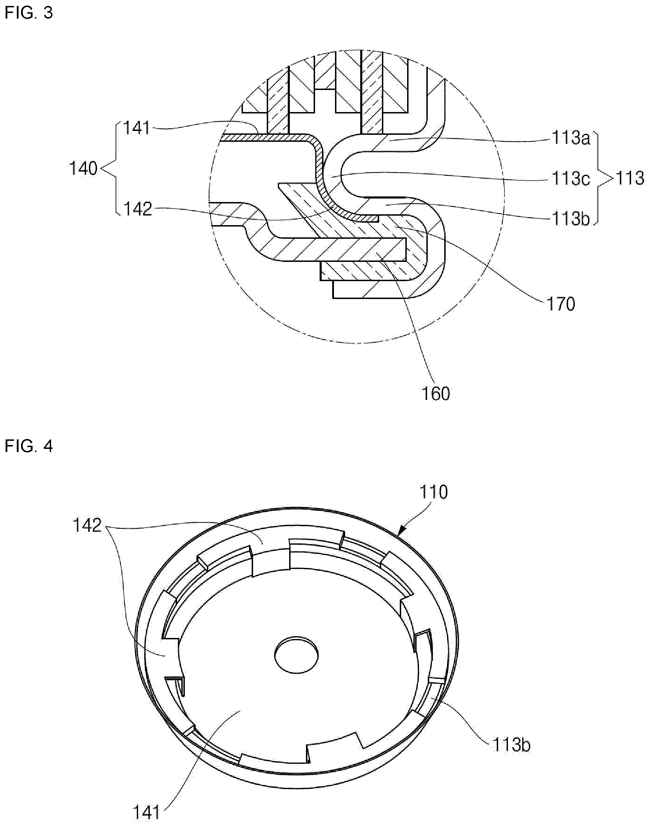

FIG. 1 is a perspective view of a cylindrical secondary battery 100 according to an embodiment of the present disclosure, FIG. 2 is a cross-sectional view of the cylindrical secondary battery 100 shown in FIG. 1, and FIG. 3 is an enlarged cross-sectional view of a portion of the cylindrical secondary battery 100 shown in FIG. 2.

As shown in FIGS. 1 to 3, the cylindrical secondary battery 100 according to an embodiment of the present disclosure includes a cylindrical can 110, an electrode assembly 120 accommodated in the cylindrical can 110, a rivet terminal 150 coupled to the cylindrical can 110 at a terminal hole (e.g., a terminal opening) at one end of the cylindrical can 110, and a cap plate 160 sealing an opening provided at the other end (e.g., the opposite end) of the cylindrical can 110.

The cylindrical can 110 includes a circular upper surface portion 111 and a side portion 112 extending a length (e.g., a predetermined length) downwardly from an edge (e.g., a periphery) of the upper surface portion 111. The upper surface portion 111 and the side portion 112 of the cylindrical can 110 may be integrally formed.

The circular upper surface portion 111 may have a flat circular plate shape, and a terminal hole 111a may extend through (e.g., may penetrate) the center thereof. The rivet terminal 150 may be inserted into the terminal hole 111a and fixed thereto. A first gasket 111b for sealing and electrical insulation may be interposed between the terminal hole 111a and the rivet terminal 150. The first gasket 111b may prevent contact between the rivet terminal 150 and the cylindrical can 110 such that they are electrically separated (e.g., electrically isolated). The terminal hole 111a in the upper surface portion 111 of the cylindrical can 110 may be sealed by the first gasket 111b. The first gasket 111b may be formed of a resin material, such as polyethylene (PE), polypropylene (PP), or polyethylene terephthalate (PET).

In the cylindrical secondary battery 100, a lower portion of the cylindrical can 110 is open during the manufacturing process. Accordingly, the electrode assembly 120 may be inserted into the cylindrical secondary battery 100 through the open lower portion (or open lower end) of the cylindrical can 110 together with an electrolyte during a manufacturing process. Here, the electrolyte and the electrode assembly 120 may be inserted into the cylindrical can 110 in a state in which the open lower portion thereof faces upwardly. After the electrolyte and the electrode assembly 120 are inserted into the cylindrical can 110, the cap plate 160 may be coupled to the open lower end to seal the inside of the cylindrical can 110. The electrolyte allows lithium ions to move between a positive electrode plate 121 and a negative electrode plate 122, which form the electrode assembly 120 together with a separator 123. The electrolyte may be a non-aqueous organic electrolyte that is a mixture of a lithium salt and a high-purity organic solvent. In some embodiments, the electrolyte may be a polymer using a polymer electrolyte, or a solid electrolyte, but the kind of the electrolyte is not limited thereto.

The cylindrical can 110 may be made of steel, a steel alloy, aluminium, an aluminium alloy, or an equivalent thereof, but the material thereof is not limited thereto. The cylindrical can 110 may have a beading part (e.g., a bead) 113 recessed inwardly on the upper portion of the cap plate 160 so that the electrode assembly 120 does not come off (e.g., fall out) to the outside, and a crimping part (e.g., a crimp) 114 bent inwardly at the lower portion of the cap plate 160.

After the electrode assembly 120 is inserted through the open lower end of the cylindrical can 110, the beading part 113 is formed to prevent the electrode assembly 120 from being separated from the cylindrical can 110. The beading part 113 includes an upper flat portion 113a and a lower flat portion 113b, which are substantially parallel to the upper surface portion 111, and a connection portion 113c connecting (e.g., extending between) the upper flat portion 113a and the lower flat portion 113b to each other. The upper flat portion 113a and the lower flat portion 113b may have outer surfaces facing each other. The outer surfaces may correspond to the outer surface of the cylindrical can 110.

The edge of the lower surface of the electrode assembly 120 may be seated on the upper flat portion 113a of the beading part 113. For example, an edge of the lower surface of the electrode assembly 120 may contact the upper surface of the upper flat portion 113a of the beading part 113.

The electrode assembly 120 includes the positive electrode plate 121 coated with a positive active material, the negative electrode plate 122 coated with a negative electrode active material, and the separator 123 interposed between the positive electrode plate 121 and the negative electrode plate 122 to prevent a short circuit between the positive electrode plate 121 and the negative electrode plate 122 while allowing lithium ions to move therebetween. After the positive electrode plate 121, the negative electrode plate 122, and the separator 123 are stacked, the electrode assembly 120 is wound from a winding leading edge to have a substantially cylindrical shape. In addition, in the electrode assembly 120, a positive electrode uncoated portion without a positive electrode active material coated thereon may upwardly protrude from the positive electrode plate 121, and a negative electrode uncoated portion without a negative electrode active material coated thereon may downwardly protrude from the negative electrode plate 122.

In the positive electrode plate 121, a positive electrode active material made of a transition metal oxide is coated on at least one surface of a positive electrode current collector plate, which is a plate-shaped metal foil made of, for example, aluminium (Al). In addition, the positive electrode plate 121 may have a positive electrode uncoated portion that is not coated with a positive electrode active material at an upper end thereof. The positive electrode uncoated portion may upwardly protrude from the electrode assembly 120. For example, in the positive electrode plate 121, the positive electrode uncoated portion may protrude farther upwardly than the negative electrode plate 122 and the separator 123.

In the negative electrode plate 122, a negative active material, such as graphite or carbon, is coated on at least one surface of a negative electrode current collector plate, which is a plate-shaped metal foil made of, for example, copper (Cu) or nickel (Ni). In addition, the negative electrode plate 122 may include a negative electrode uncoated portion that is not coated with a negative electrode active material at the lower end. The negative electrode uncoated portion may downwardly protrude from the electrode assembly 120. For example, in the negative electrode plate 122, the negative electrode uncoated portion may protrude farther downwardly than the positive electrode plate 121 and the separator 123.

The separator 123 may be polyethylene (PE) or polypropylene (PP), but the present disclosure is not limited thereto. The separator 123 may prevent an electric short between the positive electrode plate 121 and the negative electrode plate 122 while allowing lithium ions to move.

The positive electrode current collector plate 130 may be a circular metal plate having a shape corresponding to the upper surface of the electrode assembly 120. The planar size of the positive electrode current collector plate 130 may be the same as or smaller than the size of the upper surface of the electrode assembly 120. The positive electrode current collector plate 130 may be made of aluminium (Al). The positive electrode current collector plate 130 may be fixed by welding and electrically connected to the positive electrode plate 121 exposed at the upper portion of the electrode assembly 120 in a state in which the lower surface thereof is in contact with the upper surface of the electrode assembly 120. The positive electrode current collector plate 130 may be fixed by welding and electrically connected to the rivet terminal 150 in a state in which the upper surface thereof is in contact with the lower surface of the rivet terminal 150. The positive electrode current collector plate 130 acts as a passage for current flow between the positive electrode plate 121 of the electrode assembly 120 and the rivet terminal 150.

The negative electrode current collector plate 140 may include a circular flat portion 141 corresponding to the lower surface of the electrode assembly 120 and an extension portion 142 extending downwardly from an edge (e.g., a periphery) of the flat portion 141. The upper surface of the flat portion 141 may be in contact with the lower surface of the electrode assembly 120. The upper surface of the flat portion 141 may be fixed by welding and electrically connected to the negative electrode plate 122 exposed at the lower portion of the electrode assembly 120 in a state of being in contact with the lower surface of the electrode assembly 120.

A plurality of extension portions 142 may be provided along the edge of the flat portion 141 and spaced apart from each other. FIG. 4 shows a bottom perspective view of a state in which the negative electrode current collector plate 140 is seated on the lower flat portion 113b of the beading part 113 after the beading part 113 of the cylindrical can 110 is formed. As shown in FIG. 4, the extension portion 142 is illustrated as including four extension portions 142 symmetrical to each other about the flat portion 141, but the present disclosure is not limited thereto. The extension portion 142 may be bent downward from the edge of the flat portion 141 to then extend. In addition, the extension portion 142 may be in contact with the inner surfaces of the connection portion 113c and the lower flat portion 113b of the beading part 113. Here, the inner surfaces may correspond to the inner surface of the cylindrical can 110. The extension portion 142 may have an end located below the lower flat portion 113b of the beading part 113. The extension portion 142 may be welded in a state of being in contact with the inner surface of the lower flat portion 113b of the beading part 113 to be fixed and electrically connected to the cylindrical can 110. Therefore, the negative electrode current collector plate 140 acts as a passage of current flow between the negative electrode plate 122 of the electrode assembly 120 and the cylindrical can 110.

The extension portion 142 and the beading part 113 may be welded in the direction of the extension portion 142 in a state in which the negative electrode current collector plate 140 is seated on the lower portion of the beading part 113, before the crimping part 114 of the cylindrical can 110 is formed, as shown in FIG. 4. The welding of the extension portion 142 and the beading part 113 may be achieved by welding the extension portion 142 through the beading part 113 from the outside of the cylindrical can 110 after the cylindrical can 110 is sealed. To prevent a second gasket 170 from being damaged by welding, the second gasket 170 may further include a groove in a region corresponding to a welded portion.

The rivet terminal 150 may be inserted into the terminal hole 111a provided in the upper surface portion 111 of the cylindrical can 110 to be electrically connected to the positive electrode current collector plate 130. The rivet terminal 150 may be made of the same or similar material as the positive electrode current collector plate 130 and the positive electrode plate 121. The diameter of a portion of the rivet terminal 150 exposed to an upper portion of the cylindrical can 110 and the diameter of a portion positioned inside the cylindrical can 110 may be larger than the diameter of a portion thereof positioned in the terminal hole 111a. For convenience, in the rivet terminal 150, the portion exposed to the upper portion of the cylindrical can 110 is referred to as an upper end of the rivet terminal 150, and the portion positioned inside the cylindrical can 110 to face the electrode assembly 120 is referred to as a lower end of the rivet terminal 150. After the rivet terminal 150 is coupled to the terminal hole 111a in the upper surface portion 111 of the cylindrical can 110 from the bottom to the top, the upper end may be subjected to compression deformation (e.g., compression molding) by a processing method, such as pressing or spinning, to be in close contact with the upper surface portion 111. The first gasket 111b may be interposed between the rivet terminal 150 and the cylindrical can 110 in the terminal hole 111a to electrically insulate and seal the rivet terminal 150 and the cylindrical can 110. The rivet terminal 150 may be electrically connected to the positive electrode plate 121 of the electrode assembly 120 through the positive electrode current collector plate 130.

The cap plate 160 is a circular metal plate and is coupled to the lower end of the cylindrical can 110. The cap plate 160 is coupled to the lower end of the cylindrical can 110 in a state in which the second gasket 170 is interposed therebetween, thereby preventing the cap plate 160 from being electrically connected to the negative electrode current collector plate 140. Because the cap plate 160 is not electrically connected to the positive electrode or the negative electrode of the electrode assembly 120, it has no electrical polarity.

The cap plate 160 may be fixed by forming the crimping part 114 at the lower end of the cylindrical can 110 in a state in which the edge of the cap plate 160 is seated under the lower flat portion 113b of the beading part 113 of the cylindrical can 110. The cap plate 160 may be seated on the beading part 113 in a state in which the open lower portion of the cylindrical can 110 faces upwardly.

For example, in a state in which the second gasket 170 is interposed under the lower flat portion 113b of the beading part 113 of the cylindrical can 110, the cap plate 160 may be seated. The cap plate 160 may be seated under the negative electrode current collector plate 140 coupled to the lower flat portion 113b of the beading part 113 in a state in which the second gasket 170 is interposed therebetween. Thereafter, the crimping part 114 of the cylindrical can 110 may be inwardly bent to the cap plate 160 to press the second gasket 170, thereby coupling the cap plate 160 and the cylindrical can 110 to each other. Here, the second gasket 170 may also be interposed between an end of the extension portion 142 of the negative electrode current collector plate 140 and the cap plate 160.

Because the end of the negative electrode current collector plate 140 is located at the lower flat portion 113b of the beading part 113, sealing of the cap plate 160 and the cylindrical can 110 may be more easily achieved in a state in which the second gasket 170 is interposed therebetween. For example, if the end of the negative electrode current collector plate 140 further extends via the lower flat portion 113b of the beading part 113, the end of the negative electrode current collector plate 140 may be broken or cut off when the crimping part 114 presses the second gasket 170 to seal the cap plate and the cylindrical can 110. Therefore, sealing of the cap plate 160 and the cylindrical can 110 may not be easily achieved.

The cap plate 160 may include at least one protrusion 161 protruding downwardly. For example, the protrusion 161 of the cap plate 160 may be spaced apart from the center thereof and protrude downwardly to have a planar ring shape. As another example, the protrusion 161 of the cap plate 160 may protrude downwardly to have a plurality of patterns. The cap plate 160 may further support an internal pressure of the cylindrical can 110 by including the protrusion 161. In addition, the lower surface of the protrusion 161 of the cap plate 160 may be located above the lower surface of the crimping part 114 of the cylindrical can 110. For example, the crimping part 114 of the cylindrical can 110 may protrude further downwardly than the protrusion 161 of the cap plate 160. Therefore, when the cylindrical secondary battery 100 is placed on a flat surface, the crimping part 114 of the cylindrical can 110 may contact one surface, and the protrusion 161 of the cap plate 160 may be spaced apart from the one surface. In addition, because the crimping part 114 of the cylindrical can 110 protrudes farther downwardly than the protrusion 161 of the cap plate 160, even when the cap plate 160 expands due to the internal pressure of the cylindrical can 110, the cap plate 160 can be prevented from contacting the one surface. Therefore, the cylindrical secondary battery 100 can maintain the overall height even when the internal pressure of the cylindrical can 110 increases.

In addition, the cap plate 160 may have a notch 162 formed therein to be opened at a reference pressure. When the internal pressure of the cylindrical can 110 is equal to or greater than a fracture pressure of the notch 162, the notch 162 may burst to prevent the cylindrical secondary battery 100 from exploding. That is, when excessive internal pressure is generated inside the cylindrical can 110, the notch 162 may burst to discharge the excessive internal pressure. The notch 162 in the cap plate 160 may be spaced apart from the center thereof and may be formed to have a planar ring shape. As another example, the notch 162 may be formed to have a plurality of patterns, but the shape of the notch 162 is not limited.

In addition, the notch 162 may be formed to be spaced apart from the protrusion 161. Preferably, the notch 162 may be provided in a concave portion 163 that is concavely formed in the direction of the cylindrical can 110, compared to the protrusion 161. The cap plate 160 includes irregularities, namely the concave portion 163 and the protrusion 161, and thus can withstand the internal pressure even when the internal pressure of the cylindrical can 110 rises.

The second gasket 170 may be made of a resin material, such as polyethylene (PE), polypropylene (PP), polyethylene terephthalate (PET), or the like. The second gasket 170 may be sealed by pressing a portion between the cap plate 160 and the cylindrical can 110, and thus, the cap plate 160 may not be separated from the cylindrical can 110.

In the cylindrical secondary battery 100, both a negative electrode and a positive electrode are provided on the upper surface thereof. Thus, when a plurality of cylindrical secondary batteries 100 are electrically connected to each other via a bus bar, the cylindrical secondary batteries 100 have to be connected to one another at only the upper surface thereof, thereby simplifying a bas bar connection structure.

As described above, a cylindrical secondary battery, according to embodiments of the present disclosure, includes irregularities on a cap plate to further support the internal pressure of a cylindrical can.

In addition, the irregularities are provided on the cap plate to support the internal pressure of the cylindrical can. Embodiments of the present disclosure provide a cylindrical secondary battery which can maintain its overall height even when the cap plate expands due to an increase in the internal pressure of the cylindrical can because a crimping part of the cylindrical can protrudes farther downwardly than a protrusion of the cap plate.

In addition, embodiments of the present disclosure provide a cylindrical secondary battery, in which both a positive electrode and a negative electrode are provided on the upper surface thereof. Thus, when electrically connecting a plurality of the cylindrical secondary batteries together by a bus bar, they only have to be connected to one another at the upper sides thereof, thereby simplifying a bus bar connection structure.

The foregoing embodiments are only some embodiments for carrying out the present disclosure, which is not limited to the embodiments described herein. It will be understood by a person skilled in the art that various changes in form and details may be made therein without departing from the scope of the present disclosure as defined by the following claims and their equivalents.

## Claims

1. A cylindrical secondary battery comprising:
an electrode assembly comprising a positive electrode plate, a separator, and a negative electrode plate;
a cylindrical can accommodating the electrode assembly and being electrically connected to the negative electrode plate, a lower end of the cylindrical can being open;
a rivet terminal passing through an upper surface of the cylindrical can and electrically connected to the positive electrode plate; and
a cap plate sealing the lower end of the cylindrical can, the cap plate having no electrical polarity.

2. The cylindrical secondary battery of claim 1, wherein the cylindrical can has:
an upper surface portion having a flat plate shape and a terminal hole extending through a center portion; and
a side portion extending downwardly from an edge of the upper surface portion.

3. The cylindrical secondary battery of claim 2, wherein the rivet terminal is coupled to the upper surface portion at the terminal hole with a first gasket interposed therebetween, and
wherein an upper end of the rivet terminal is exposed to outside.

4. The cylindrical secondary battery of claim 3, further comprising a plate-shaped positive electrode current collector plate accommodated in the cylindrical can, a lower surface of the positive electrode current collector plate being fixed by welding and electrically connected to the positive electrode plate exposed at an upper end of the electrode assembly, an upper surface of the positive electrode current collector plate being welded to a lower surface of the rivet terminal.

5. The cylindrical secondary battery of any one of claims 1 to 4, wherein the cylindrical can has:
a beading part recessed inwardly on an upper portion of the cap plate; and
a crimping part bent at the lower end of the cylindrical can to fix the cap plate and being at a lower portion of the cap plate.

6. The cylindrical secondary battery of claim 5, wherein the beading part has:
an upper flat portion and a lower flat portion having outer surfaces facing each other; and
a connection part extending between the upper flat portion and the lower flat portion.

7. The cylindrical secondary battery of claim 6, further comprising a negative electrode current collector plate accommodated in the cylindrical can and having a flat portion being in a plate shape, and
wherein the negative electrode current collector plate is welded to a lower surface of the electrode assembly and has an extension portion extending downwardly from an edge of the flat portion that is welded to the beading part of the cylindrical can.

8. The cylindrical secondary battery of claim 7, wherein the extension portion of the negative electrode current collector plate has an end portion below the lower flat portion of the beading part and welded to an inner surface of the lower flat portion.

9. The cylindrical secondary battery of any one of claims 5 to 8, wherein the cap plate has:
a protrusion that protrudes in a downwardly direction; and
a concave portion that is concavely formed inwardly toward the cylindrical can with respect to the protrusion, and
wherein a notch is formed in the concave portion.

10. The cylindrical secondary battery of claim 9, wherein a lower surface of the beading part protrudes farther downwardly than the protrusion of the cap plate.

11. The cylindrical secondary battery of any one of claims 1 to 10, further comprising a second gasket between the cylindrical can and the cap plate.
